# EUROPEAN PATENT APPLICATION

(11) **EP 4 797 372 A1**
(43) Date of publication of application: **26.08.2026**
(21) Application number: 25788874.3
(22) Date of filing: 09.04.2025
(51) Int. Cl.: H01M 10/0567, H01M 10/0568, H01M 10/0569

(54) **ELECTROLYTE ADAPTED TO LITHIUM MANGANESE IRON PHOSPHATE POSITIVE ELECTRODE MATERIAL AND BATTERY**

(30) Priority: 31.12.2024 CN 202411997544
(71) Applicant: Eve Power Co., Ltd., Jingmen, Hubei 448000 (CN)
(72) Inventor: PAN, Kanghua, Jingmen, Hubei 448000 (CN); LI, Chi, Jingmen, Hubei 448000 (CN); WANG, Feng, Jingmen, Hubei 448000 (CN); ZHANG, Huan, Jingmen, Hubei 448000 (CN); LIU, Fanfen, Jingmen, Hubei 448000 (CN); YUAN, Dingding, Jingmen, Hubei 448000 (CN)
(74) Representative: Studio Torta S.p.A.
(86) International application number: PCT/CN2025/088119
(87) International publication number: WO 2026/143889

(57) **Abstract**

Disclosed are an electrolyte and a battery electrolyte adapted to a lithium manganese iron phosphate positive electrode material. The electrolyte includes a non-aqueous solvent, a lithium salt, and a negative electrode film-forming additive. The mass ratio a of a total mass of the dimethyl carbonate and the carboxylate in the non-aqueous solvent, a molar ratio b of the lithium bis(fluorosulfonyl)imide in the lithium salt, the molar ratio y of a manganese element in the lithium manganese iron phosphate positive electrode material, and a compaction density c of a positive electrode sheet satisfy a formula I as follows: $0.1 \leq \frac{a + b}{y \times c} \leq 3 ;$ 0.01≤a≤1; 0.01≤b≤1; 1.8≤c≤2.7 in a unit of g/cm³; a chemical formula of the lithium manganese iron phosphate positive electrode material is LiₓMn_{y}Fe_{1-y}PO₄, 0.95≤x≤1.05, 0.3≤y≤0.8; and a mass ratio d of the negative electrode film-forming additive in the electrolyte and the y satisfy a formula as follows: 3≤(100xd)/y≤20 and 0.001≤d≤0.2.

## Description

The present disclosure claims the benefit of priority of Chinese Patent Application 202411997544.X, filed with the China National Intellectual Property Administration on December 31, 2024, the contents of which is incorporated herein by reference in its entirety.

### TECHNICAL FIELD

The present disclosure belongs to the technical field of battery materials, and in particular, relates to an electrolyte adapted to a lithium manganese iron phosphate positive electrode material and a battery.

### BACKGROUND

Lithium manganese iron phosphate (LiMnFePO₄) has a higher voltage platform than lithium iron phosphate (LiFePO₄), and theoretically its energy density is expected to be about 20% higher than that of lithium iron phosphate, which can overcome the limitation of lithium iron phosphate in improving energy density to some extent. Compared with ternary lithium battery materials, lithium manganese iron phosphate has an energy density similar to that of ternary five-series materials, and it also has higher safety, lower cost, and better environmental compatibility. However, the addition of manganese element makes the deintercalation and migration of lithium ions more difficult, which leads to poor conductivity of the materials, low transport efficiency of lithium ions among particles in the material, and poor kinetics of the battery. During the reaction, due to the Jahn-Teller effect caused by Mn³⁺, manganese element will be dissolved from the positive electrode material and deposited on the surface of negative electrode. Such deposition will destroy the solid electrolyte interface film (SEI) of the battery, thereby shortening the cycle life of the battery.

### SUMMARY

In the related arts, the research direction of electrolyte to improve the cycle performance of lithium manganese iron phosphate are mainly relates to complexing metal Mn ions by adding positive complexing agent to prevent the deposition of Mn on the negative electrode, or to protect the positive electrode and the negative electrode at the same time to form an SEI and a positive electrode electrolyte interface film (CEI). However, general positive electrode complexing agents will increase the impedance of the battery, and if the addition amount is too much, performance of the battery will be significantly affected; while, if the addition amount is too little, the effect will be minimal.

The present disclosure provides an electrolyte adapted to a lithium manganese iron phosphate positive electrode material. The electrolyte includes a non-aqueous solvent, a lithium salt, and a negative electrode film-forming additive. The non-aqueous solvent includes a carbonate and a carboxylate. The carbonate includes dimethyl carbonate. The lithium salt includes lithium bis(fluorosulfonyl)imide. A mass ratio a of a total mass of the dimethyl carbonate and the carboxylate in the non-aqueous solvent, a molar ratio b of the lithium bis(fluorosulfonyl)imide in the lithium salt, a molar ratio y of a manganese element in the lithium manganese iron phosphate positive electrode material, and a compaction density c of a positive electrode sheet satisfy a formula I as follows: $0.1 \leq \frac{a + b}{y \times c} \leq 3 ,$
where 0.01≤a≤1; 0.01≤b≤1; and 1.8≤c≤2.7 in g/cm³;
a chemical formula of the lithium manganese iron phosphate positive electrode material is LiₓMn_{y}Fe_{1-y}PO₄, where 0.95≤x≤1.05, and 0.3≤y≤0.8; and
a mass ratio d of the negative electrode film-forming additive in the electrolyte and the y satisfy a formula as follows: $3 \leq 100 \times d / y \leq 20 ;$
where 0.001≤d≤0.2.

The present disclosure also provides a battery. The battery includes a positive electrode sheet, a negative electrode sheet, a separator, and an electrolyte. A positive electrode material of the positive electrode sheet is lithium manganese iron phosphate. The electrolyte is the electrolyte adapted to a lithium manganese iron phosphate positive electrode material as described above.

### BENEFICIAL EFFECTS

According to the electrolyte adapted to a lithium manganese iron phosphate positive electrode material provided in the embodiments of the present disclosure, the kinetic performance of the lithium manganese iron phosphate is improved by introducing a solvent with low viscosity and high conductivity and a lithium salt into the electrolyte. Meanwhile, suitable film-forming additives are used to protect the negative electrode to prevent the damage caused by manganese deposition. In addition, the electrolyte is optimized purposefully according to the ratio of manganese to iron in the lithium manganese iron phosphate and the compaction density. The optimized electrolyte can improve the problem that manganese ions in the lithium manganese phosphate positive electrode material are easily dissolved and deposited on the surface of negative electrode to destroy the interface film. The transport rate of lithium ions can be improved, and the kinetic performance can be improved. Further, the conductivity, the battery rate performance, and the cycle performance can be improved.

According to the battery provided in the embodiment of the present disclosure, by using the electrolyte adapted to a lithium manganese iron phosphate positive electrode material described above, the problem that manganese ions in the lithium manganese phosphate positive electrode material are easily dissolved and deposited on the surface of negative electrode to destroy the interface film can be improved. The transport rate of lithium ions can be improved, and the kinetic performance can be improved. Further, the conductivity, the battery rate performance, and the cycle performance can be improved.

### DETAILED DESCRIPTION

In the prior art, manganese ions in the lithium manganese phosphate positive electrode material are easily dissolved and deposited on the surface of negative electrode to destroy the interface film. Generally, positive electrode complexing agents are added to the electrolyte, but this increases a battery impedance. Particularly, too much addition amount will significantly affect performance of the battery; while too little addition amount will have little effect.

Accordingly, the present disclosure provides an electrolyte adapted to a lithium manganese iron phosphate positive electrode material, the electrolyte comprising a non-aqueous solvent, a lithium salt, and a negative electrode film-forming additive; the non-aqueous solvent comprising a carbonate and a carboxylate, the carbonate comprising dimethyl carbonate; and the lithium salt comprising lithium bis(fluorosulfonyl)imide;

in which a mass ratio a of a total mass of the dimethyl carbonate and the carboxylate in the non-aqueous solvent, a molar ratio b of the lithium bis(fluorosulfonyl)imide in the lithium salt, a molar ratio y of a manganese element in the lithium manganese iron phosphate positive electrode material, and a compaction density c of a positive electrode sheet satisfy a formula I as follows:
$0.1 \leq \frac{a + b}{y \times c} \leq 3$
in the formula I, 0.01≤a≤1; 0.01≤b≤1; and 1.8≤c≤2.7 in g/cm³;
a chemical formula of the lithium manganese iron phosphate positive electrode material is LiₓMn_{y}Fe_{1-y}PO₄, where 0.95≤x≤1.05, and 0.3≤y≤0.8; and
a mass ratio d of the negative electrode film-forming additive in the electrolyte and the y satisfy a formula as follows:
   $3 \leq 100 \times d / y \leq 20$
in the formula II, 0.001≤d≤0.2.

In the present disclosure, the value of (a+b)/(y×c) in the formula I is any one among 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, or a range between any two of them.

The value of 100×d/y is any one of 3, 4, 5, 6, 7, 8, 9, 10, 11, 12, 13, 14, 15, 16, 17, 18, 19, 20, or a range between any two of them.

The value of a is any one of 0.01, 0.1, 0.2, 0.3, 0.4, 0.5, 0.6, 0.7, 0.8, 0.9, 1.0, or a range between any two of them.

The value of b is any one of 0.01, 0.1, 0.2, 0.3, 0.4, 0.5, 0.6, 0.7, 0.8, 0.9, 1.0, or a range between any two of them.

The value of c is any one of 1.8, 1.9, 2.0, 2.1, 2.2, 2.3, 2.4, 2.5, 2.6, 2.7 or a range between any two of them.

The value of y is any one of 0.3, 0.4, 0.5, 0.6, 0.7, 0.8, or a range between any two of them.

The value of d is any one of 0.001, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, or a range between any two of them.

The content ratios of a, b, and d in the formula I of the present disclosure are the content ratios after a battery is formatted.

According to the present disclosure, by taking into account that the conductivity and the dynamic performance of lithium manganese iron phosphate can be improved by introducing a solvent with low viscosity and high conductivity into the electrolyte, non-aqueous solvents such as dimethyl carbonate and carboxylate are selected as influencing factors. These two ester-based solvents have low viscosity and high conductivity, and have a very good wetting effect on high-pressure dense electrode materials. One or more carboxylate-based solvents can be selected for compounding, and lithium bis(fluorosulfonyl)imide is selected as an influencing factor because this lithium salt has good conductivity and can also promote the negative electrode film formation. Considering that the negative film-forming agents can protect the surface of the negative electrode to prevent manganese deposition, the negative film-forming agent is taken as an influencing factor. Further, the interaction between manganese element, iron element and compaction density in lithium manganese iron phosphate is also considered, and manganese element and compaction density are regarded as an influencing factor of electrolyte performance. The multiple influencing factors considered in the present disclosure have a mutually reinforcing and mutually influencing effect. When the above-mentioned relationship is satisfied among the factors, capacity-decaying phenomena caused by manganese deposition and conductivity and kinetic performance can be significantly improved.

In the present disclosure, the kinetic performance of the lithium manganese iron phosphate is improved by introducing a solvent with low viscosity and high conductivity and a lithium salt into the electrolyte. Meanwhile, suitable film-forming additives are used to protect the negative electrode to prevent the damage caused by manganese deposition. In addition, the electrolyte is optimized purposefully according to the ratio of manganese to iron in the lithium manganese iron phosphate and the compaction density. The optimized electrolyte can improve the problem that manganese ions in the lithium manganese phosphate positive electrode material are easily dissolved and deposited on the surface of negative electrode to destroy the interface film. The transport rate of lithium ions can be improved, and the kinetic performance can be improved. Further, the conductivity, the battery rate performance, and the cycle performance can be improved.

In some embodiments, in the formula I, $0.5 \leq \frac{a + b}{y \times c} \leq 2$.

In some embodiments, 0.55≤(a+b)/(y×c)≤2.

According to the present disclosure, by making the mass ratio of the total mass of the dimethyl carbonate and the carboxylate in the non-aqueous solvent, the molar ratio of the lithium bis(fluorosulfonyl)imide in the lithium salt, the molar ratio of a manganese element in the lithium manganese iron phosphate positive electrode material, and the compaction density of a positive electrode sheet satisfy the above formula, the synergistic effect between carbonate, carboxylate, lithium bis(fluorosulfonyl)imide and the positive electrode sheet and the compaction density can be fully utilized to optimize the electrolyte and improve the conductivity and kinetic performance of lithium manganese iron phosphate.

In some embodiments, in the formula I, the value range of a is, for example, 0.05≤a≤1; for another example, 0.1≤a≤1; and yet for another example, 0.1≤a≤0.8. The value range of b is, for example, 0.05≤b≤1; for another example, 0.1≤b≤1; and yet for another example, 0.1≤b≤0.8. For example, 0.1≤a+b≤2; for another example, 0.2≤a+b≤2; and yet for another example, 0.2≤a+b≤1.5.

According to the present disclosure, by increasing the ratio of the total mass of the carbonate and the carboxylate in the non-aqueous solvent and the ratio of lithium bis(fluorosulfonyl)imide in the lithium salt, the synergistic effect between the solvent and the electrolytic lithium salt is fully exerted, which is helpful to improve the conductivity of the electrolyte.

In some embodiments, in the formula I, the value ranges of c and y are, for example, 1.9≤c≤2.6; and 0.4≤y≤0.8.

In the present disclosure, the compaction density is defined as a high compaction density and has a good matching effect with the selected ester-based solvents and lithium salts. The above ester-based solvents can also better impregnate the high compaction density lithium manganese iron phosphate positive electrode sheet.

In some embodiments, in the formula II, the value range of d is, for example, 0.01≤d≤0.15; for another example, 0.01≤d≤0.10; and yet for another example, 0.02≤d≤0.08. As another example, 5≤100×d/y≤15. In the present disclosure, by defining the content of the negative electrode film-forming additives and the ratio of the negative electrode film-forming additives to the manganese element, the degree of manganese ion deposition can be improved, and the negative electrode can be protected from manganese destroying the interface.

In some embodiments, the mass ratio of non-aqueous solvent in the electrolyte ranges from 0.5 to 0.9 (or 50% to 90%), such as 0.7 to 0.9, and further such as any value of 0.5, 0.6, 0.7, 0.8, 0.9, or a range between any two of them. The mass ratio of the lithium salt in the electrolyte ranges from 0.05 to 0.2 (or 5% to 2%), for example, 0.1 to 0.2, for example, any value of 0.05, 0.08, 0.1, 0.12, 0.15, 0.18, 0.2, or a range between any two of them. The mass ratio of the negative electrode film-forming additive in the electrolyte ranges from 0.01 to 0.15 (or 1% to 15%), for example, 0.02 to 0.08, or any value of 0.01, 0.03, 0.05, 0.08, 0.10, 0.12, 0.15, or a range between any two of them, and a sum of the above mass ratios is 0.95 to 1 (or 95% to 100%). In addition to the non-aqueous solvent, the lithium salt, and the negative electrode film-forming additive, other auxiliary agents such as the positive electrode film-forming additive and the like may be included in the electrolyte of the present disclosure. The auxiliary agents may be selected according to actual requirements, with a mass ratio of 0.01 to 0.2 (or 1% to 20%), for example, any value of 0.01, 0.03, 0.05, 0.08, 0.10, 0.12, 0.15, 0.18, 0.20, or a range between any two of them.

In some embodiments, the carboxylate in the non-aqueous solvent is selected from at least one of methyl acetate, ethyl acetate, methyl propionate, ethyl propionate, methyl butyrate, propyl acetate, methyl formate, propyl propionate, methyl methacrylate, methyl isobutyrate, methyl trimethylacetate; or ethyl trimethylacetate.

The carbonate in the non-aqueous solvent includes at least one of ethylene carbonate, propylene carbonate, ethyl methyl carbonate, or diethyl carbonate in addition to the dimethyl carbonate.

For example, the non-aqueous solvent is formed by mixing the ethylene carbonate, the dimethyl carbonate, the ethyl acetate, the methyl acetate, and the ethyl methyl carbonate. More specifically, a mass ratio of the ethylene carbonate, the dimethyl carbonate, the ethyl acetate (methyl acetate), the methyl acetate, and the ethyl methyl carbonate is (1 to 3):(1 to 5):(1 to 4):(1 to 5). Within this mass ratio range, the ratio of ethylene carbonate is any value of 1, 2, 3, or a range between any two of them; the ratio of dimethyl carbonate is any value of 1, 2, 3, 4, 5, or a range between any two of them; the ratio of ethyl acetate (methyl acetate) is any value of 1, 2, 3, 4, or a range between any two of them; and the ratio of ethyl methyl carbonate is, for example, any value of 1, 2, 3, 4, 5, or a range between any two of them. For example, the mass ratio of them is (1 to 3):(1 to 3):(1 to 3):(3 to 5); and for another example it is 2:2:2:4.

The above-mentioned carboxylic acid-based solvent and specific ratio of carbonate selected in the present disclosure are more soluble in lithium manganese iron phosphate materials, and can better infiltrate lithium manganese iron phosphate positive electrode sheets with high density, thereby improving conductivity and kinetic performance.

In some embodiments, the lithium salt includes at least one of lithium tetrafluoroborate, lithium hexafluorophosphate, lithium perchlorate, lithium bis(trifluoromethylsulfonyl) imide, or lithium difluoro(oxalate)borate in addition to the lithium bis(fluorosulfonyl)imide. For example, the lithium salt includes bis(trifluoromethylsulfonyl) imide and/or lithium difluoro(oxalate)borate. Specifically, the molar ratio of lithium bis(fluorosulfonyl)imide to lithium hexafluorophosphate is (3 to 5):(5 to 7), for example, it may be 3:5, 3:6, 3:7, 4:5, 4:6, 4:7, 5:5, 5:6, or 5:7. According to the present disclosure, by selecting the above-mentioned two lithium salts and the above-mentioned ratio, and matching with the above-mentioned ester-based solvents selected in the present disclosure with each other, the conductivity and kinetic performance of the electrolyte can be improved.

In some embodiments, the negative electrode film-forming additive is selected from at least one of vinylene carbonate, vinylethylene carbonate, methylene ethylene carbonate, fluoroethylene carbonate, trifluoromethyl ethylene carbonate, di-fluoro ethylene carbonate, ethylene sulfate, propylene sulfate, methyl ethylene sulfate, ethylene sulfite, 1,3-propane sultone, 1,4-butane sultone, prop-1-ene-1,3-sultone, or methylene methanedisulfonate.

Exemplarily, the negative electrode film-forming additive is selected from at least one of vinylene carbonate, vinyl ethylene carbonate, fluoroethylene carbonate, ethylene sulfate, ethylene sulfite, or methylene methanedisulfonate. Specifically, the mass percentage content of the vinylene carbonate (VC) in the negative electrode film-forming additive ranges from 30% to 100%, for example, it may be any value of 30%, 40%, 50%, 60%, 70%, 80%, 90%, 100%, or a range between any two of them.

The negative electrode film-forming additive selected in the present disclosure can better form a film interface at the negative electrode and better improve the deposition phenomenon of manganese at the negative electrode in cooperation with the above selected solvents and lithium salts.

According to a second aspect of the present disclosure, a battery is provided. The battery includes a positive electrode sheet, a negative electrode sheet, a separator, and an electrolyte. The positive electrode material of the positive electrode sheet is lithium manganese iron phosphate. The electrolyte is the electrolyte adapted to the lithium manganese iron phosphate positive electrode material as described above.

The present disclosure is described in detail in connection with specific examples, which should not be construed as limiting the scope of protection claimed in the present disclosure.

The raw materials used in the examples of the present disclosure are related arts and can be purchased commercially.

### Example 1

Preparation of a positive electrode sheet: lithium manganese iron phosphate, polyvinylidene fluoride (i.e., a binder), and acetylene black (i.e., a conductive agent) were mixed according to a mass ratio of 95:2:3, then N-methylpyrrolidone (NMP) was added to obtain a mixture, the mixture was stirred until the mixture was uniform, thereby obtaining a positive electrode slurry. The positive electrode slurry was coated evenly on an aluminum foil, dried, and then subjected to a subsequent process such as cold pressing to finally obtain a positive electrode sheet. The chemical formula of the lithium manganese iron phosphate positive electrode material was LiMn_{0.5}Fe_{0.5}PO₄, and the compaction density was 2.2 g/cm³.

Preparation of a negative electrode sheet: a negative electrode active material graphite, acetylene black (i.e., a conductive agent), styrene-butadiene rubber (i.e., a binder), and sodium carboxymethyl cellulose (i.e., a thickening agent) were mixed according to a mass ratio 96:2:1:1, then deionized water was added, and stirred fully to obtain a negative electrode slurry. The negative electrode slurry was coated on a negative electrode current collector. After subjected to processes such as drying and cold pressing, a negative electrode sheet was obtained. Assembly of a lithium-ion battery: the positive electrode sheet and negative electrode sheet after vacuum drying, and the separator were cut, die-cut and slit, then the electrolyte was injected under high temperature and negative pressure, in this way, a square aluminum-case battery was assembled.

The solvent includes ethylene carbonate (EC), dimethyl carbonate (DMC), ethyl acetate (EA), and ethyl methyl carbonate (EMC) in a mass ratio of 2:2:2:4. The lithium salt includes lithium bis(fluorosulfonyl)imide (LiFSI) and lithium hexafluorophosphate (LiPF₆) in a molar ratio of 3:7. The concentration of lithium salt in the electrolyte was 1 M. The negative electrode film-forming additive accounted for 4 wt% of the total mass of the electrolyte, in which the vinylene carbonate (VC) accounted for 3.5 wt%, and the methylene methanedisulfonate (MMDS) accounted for 0.5 wt%. The solvent, lithium salt, and a negative electrode film-forming additive were mixed to form an electrolyte.

### Example 2

Preparation of a positive electrode sheet: lithium manganese iron phosphate, polyvinylidene fluoride (i.e., a binder), and acetylene black (i.e., a conductive agent) were mixed according to a mass ratio of 95:2:3, then N-methylpyrrolidone (NMP) was added to obtain a mixture, the mixture was stirred until the mixture was uniform, thereby obtaining a positive electrode slurry. The positive electrode slurry was coated evenly on an aluminum foil, dried, and then subjected to a subsequent process such as cold pressing to finally obtain a positive electrode sheet. The chemical formula of the lithium manganese iron phosphate positive electrode material was LiMn_{0.5}Fe_{0.5}PO₄, and the compaction density was 2.2 g/cm³.

Preparation of a negative electrode sheet: a negative electrode active material graphite, acetylene black (i.e., a conductive agent), styrene-butadiene rubber (i.e., a binder), and sodium carboxymethyl cellulose (i.e., a thickening agent) were mixed according to a mass ratio 96:2:1:1, then deionized water was added, and stirred fully to obtain a negative electrode slurry. The negative electrode slurry was coated on a negative electrode current collector. After subjected to processes such as drying and cold pressing, a negative electrode sheet was obtained.

Assembly of a lithium-ion battery: the positive electrode sheet and negative electrode sheet after vacuum drying, and the separator were cut, die-cut and slit, then the electrolyte was injected under high temperature and negative pressure, in this way, a square aluminum-case battery was assembled. The solvent includes ethylene carbonate (EC), dimethyl carbonate (DMC), ethyl acetate (EA), and ethyl methyl carbonate (EMC) in a mass ratio of 2:3:1:4. The lithium salt includes lithium bis(fluorosulfonyl)imide (LiFSI) and lithium hexafluorophosphate (LiPF₆) in a molar ratio of 5:5. The concentration of the lithium salt was 1 M. The negative electrode film-forming additive accounted for 3.5 wt% of the total mass of the electrolyte, in which the vinylene carbonate (VC) accounted for 2.5 wt%, and the ethylene sulfate (DTD) accounted for 1.0 wt%. The solvent, lithium salt, and negative electrode film-forming additive were mixed to form an electrolyte.

### Example 3

Example 3 differs from Example 1 in that the chemical formula of the lithium manganese iron phosphate positive electrode material was LiMn_{0.6}Fe_{0.4}PO₄, and the compaction density was 1.9 g/cm³; and
in that the solvent includes ethylene carbonate (EC), dimethyl carbonate (DMC), ethyl acetate (EA), and ethyl methyl carbonate (EMC) in a mass ratio of 2:5:1:2; the lithium salt includes lithium bis(fluorosulfonyl)imide (LiFSI) and lithium hexafluorophosphate (LiPF₆) in a molar ratio of 2:8, and the concentration of the lithium salt was 1 M; the negative electrode film-forming additive accounted for 5 wt% of the total mass of the electrolyte, in which the vinylene carbonate (VC) accounted for 2.0 wt%, the ethylene sulfate (DTD) accounted for 1.0 wt%, and the fluoroethylene carbonate (FEC) accounted for 2.0 wt%; and the solvent, lithium salt, and negative electrode film-forming additive were mixed to form an electrolyte.

### Example 4

Example 4 differs from Example 1 in that the chemical formula of the lithium manganese iron phosphate positive electrode material was LiMn_{0.5}Fe_{0.5}PO₄, and the compaction density was 2.2 g/cm³; and
in that the solvent includes ethylene carbonate (EC), dimethyl carbonate (DMC), methyl acetate (MA), and ethyl methyl carbonate (EMC) in a volume ratio of 2:4:1:4; the lithium salt includes lithium bis(fluorosulfonyl)imide (LiFSI) and lithium hexafluorophosphate (LiPF₆) in a molar ratio of 3:7, and the concentration of the lithium salt was 1 M; the negative electrode film-forming additive accounted for 3.5 wt% of the total mass of the electrolyte, in which the vinylene carbonate (VC) accounted for 3.0 wt%, and the methylene methanedisulfonate (MMDS) accounted for 0.5 wt%; and the solvent, lithium salt, and negative electrode film-forming additive were mixed to form an electrolyte.

### Example 5

Example 5 differs from Example 1 in that the chemical formula of the lithium manganese iron phosphate positive electrode material was LiMn_{0.5}Fe_{0.5}PO₄, and the compaction density was 2.2 g/cm³; and
in that the solvent includes ethylene carbonate (EC), dimethyl carbonate (DMC), methyl acetate (MA), and ethyl methyl carbonate (EMC) in a volume ratio of 4:0.3:0.2:5.5; the lithium salt includes lithium bis(fluorosulfonyl)imide (LiFSI) and lithium hexafluorophosphate (LiPF₆) in a molar ratio of 4:6, and the concentration of the lithium salt was 1 M; the negative electrode film-forming additive accounted for 3.5 wt% of the total mass of the electrolyte, in which the vinylene carbonate (VC) accounted for 3.0 wt%, and the ethylene sulfate (DTD) accounted for 0.5 wt%; and the solvent, lithium salt, and negative electrode film-forming additive were mixed to form an electrolyte.

### Example 6

Example 5 differs from Example 1 in that the chemical formula of the lithium manganese iron phosphate positive electrode material was LiMn_{0.5}Fe_{0.5}PO₄, and the compaction density was 2.2 g/cm³; and
in that the solvent includes ethylene carbonate (EC), dimethyl carbonate (DMC), methyl acetate (MA), and ethyl methyl carbonate (EMC) in a volume ratio of 3:1:2:4; the lithium salt includes lithium bis(fluorosulfonyl)imide (LiFSI) and lithium hexafluorophosphate (LiPF₆) in a molar ratio of 0.05:0.95, and the concentration of the lithium salt was 1 M; the negative electrode film-forming additive accounted for 3.5 wt% of the total mass of the electrolyte, in which the vinylene carbonate (VC) accounted for 3.0 wt%, and the ethylene sulfate (DTD) accounted for 0.5%; and the solvent, lithium salt, and negative electrode film-forming additive were mixed to form an electrolyte.

### Example 7

Example 7 differs from Example 1 in that the chemical formula of the lithium manganese iron phosphate positive electrode material was LiMn_{0.5}Fe_{0.5}PO₄, and the compaction density was 2.2 g/cm³; and
in that the solvent includes ethylene carbonate (EC), dimethyl carbonate (DMC), methyl acetate (MA), and ethyl methyl carbonate (EMC) in a volume ratio of 3:0.5:0.5:6; the lithium salt includes lithium bis(fluorosulfonyl)imide (LiFSI) and lithium hexafluorophosphate (LiPF₆) in a molar ratio of 1:9, and the concentration of the lithium salt was 1 M; the negative electrode film-forming additive constitutes 3.5 wt% of the total mass of the electrolyte, in which the vinylene carbonate (VC) accounted for 3.0 wt%, and the ethylene sulfate (DTD) accounted for 0.5 wt%; and the solvent, lithium salt, and negative electrode film-forming additive were mixed to form an electrolyte.

### Example 8

Example 8 differs from Example 1 in that the chemical formula of the lithium manganese iron phosphate positive electrode material was LiMn_{0.5}Fe_{0.5}PO₄, and the compaction density was 2.2 g/cm³; and
in that the solvent includes ethylene carbonate (EC), dimethyl carbonate (DMC), ethyl acetate (EA), and ethyl methyl carbonate (EMC) in a volume ratio of 2:2:2:4; the lithium salt includes lithium bis(fluorosulfonyl)imide (LiFSI) and lithium hexafluorophosphate (LiPF₆) in a molar ratio of 3:7, and the concentration of the lithium salt was 1 M; the negative electrode film-forming additive accounted for 2 wt% of the total mass of the electrolyte, in which the vinylene carbonate (VC) accounted for 1.5 wt%, and the ethylene sulfate (DTD) accounted for 0.5 wt%; and the solvent, lithium salt, and negative electrode film-forming additive were mixed to form an electrolyte.

### Example 9

Example 9 differs from Example 1 in that the chemical formula of the lithium manganese iron phosphate positive electrode material was LiMn_{0.5}Fe_{0.5}PO₄, and the compaction density was 2.2 g/cm³; and
in that the solvent includes ethylene carbonate (EC), dimethyl carbonate (DMC), ethyl acetate (EA), and ethyl methyl carbonate (EMC) in a volume ratio of 2:2:2:4; the lithium salt includes lithium bis(fluorosulfonyl)imide (LiFSI) and lithium hexafluorophosphate (LiPF₆) in a molar ratio of 3:7, and the concentration of the lithium salt was 1 M; the negative electrode film-forming additive accounted for 6 wt% of the total mass of the electrolyte, in which the vinylene carbonate (VC) accounted for 3 wt%, the methylene methanedisulfonate (MMDS) accounted for 2 wt%, and the ethylene sulfate (DTD) accounted for 1 wt%; and the solvent, lithium salt, and negative electrode film-forming additive were mixed to form an electrolyte.

### Example 10

Example 10 differs from Example 1 in that the chemical formula of the lithium manganese iron phosphate positive electrode material was LiMn_{0.5}Fe_{0.5}PO₄, and the compaction density was 2.2 g/cm³; and
in that the solvent includes ethylene carbonate (EC), dimethyl carbonate (DMC), and ethyl methyl carbonate (EMC) in a volume ratio of 3:0.01:6.99; the lithium salt includes lithium bis(fluorosulfonyl)imide (LiFSI) and lithium hexafluorophosphate (LiPF₆) in a molar ratio of 0.1:9.9, and the concentration of the lithium salt was 1 M; the negative electrode film-forming additive accounted for 3.5 wt% of the total mass of the electrolyte, in which the vinylene carbonate (VC) accounted for 3.0 wt%, and the ethylene sulfate (DTD) accounted for 0.5 wt%; and the solvent, lithium salt, and negative electrode film-forming additive were mixed to form an electrolyte.

### Example 11

Example 11 differs from Example 1 in that the chemical formula of the lithium manganese iron phosphate positive electrode material was LiMn_{0.5}Fe_{0.5}PO₄, and the compaction density was 2.2 g/cm³; and
in that the solvent includes ethylene carbonate (EC), dimethyl carbonate (DMC), ethyl acetate (EA), and ethyl methyl carbonate (EMC) in a volume ratio of 2:2:2:4; the lithium salt includes lithium bis(fluorosulfonyl)imide (LiFSI) and lithium hexafluorophosphate (LiPF₆) in a molar ratio of 3:7, and the concentration of the lithium salt was 1 M; the negative electrode film-forming additive accounted for 10 wt% of the total mass of the electrolyte, in which the vinylene carbonate (VC) accounted for 7 wt%, the methylene methanedisulfonate (MMDS) accounted for 2 wt%, and the ethylene sulfate (DTD) accounted for 1 wt%; and the solvent, lithium salt, and negative electrode film-forming additive were mixed to form an electrolyte.

### Example 12

Example 12 differs from Example 1 in that the chemical formula of the lithium manganese iron phosphate positive electrode material was LiMn_{0.5}Fe_{0.5}PO₄, and the compaction density was 2.2 g/cm³; and
in that the solvent includes ethylene carbonate (EC), dimethyl carbonate (DMC), ethyl acetate (EA), and ethyl methyl carbonate (EMC) in a volume ratio of 2:2:2:4; the lithium salt includes lithium bis(fluorosulfonyl)imide (LiFSI) and lithium hexafluorophosphate (LiPF₆) in a molar ratio of 3:7, and the concentration of the lithium salt was 1 M; the negative electrode film-forming additive accounted for 1.5 wt% of the total mass of the electrolyte, in which the vinylene carbonate (VC) accounted for 1.0 wt%, and the ethylene sulfate (DTD) accounted for 0.5%; and the solvent, lithium salt, and negative electrode film-forming additive were mixed to form an electrolyte.

### Example 13

Example 13 differs from Example 1 in that the chemical formula of the lithium manganese iron phosphate positive electrode material was LiMn_{0.5}Fe_{0.5}PO₄, and the compaction density was 2.2 g/cm³; and
in that the solvent includes ethylene carbonate (EC), dimethyl carbonate (DMC), and ethyl acetate (EA) in a volume ratio of 2:6:2; the lithium salt was lithium bis(fluorosulfonyl)imide (LiFSI), and the concentration of the lithium salt was 1 M; the negative electrode film-forming additive accounted for 3.5 wt% of the total mass of the electrolyte, in which the vinylene carbonate (VC) accounted for 3.0 wt%, and the ethylene sulfate (DTD) accounted for 0.5 wt%; and the solvent, lithium salt, and negative electrode film-forming additive were mixed to form an electrolyte.

### Comparative Example 1

Comparative Example 1 differs from Example 1 in that the chemical formula of the lithium manganese iron phosphate positive electrode material was LiMn_{0.5}Fe_{0.5}PO₄, and the compaction density was 2.2 g/cm³; and
in that the solvent includes ethylene carbonate (EC), dimethyl carbonate (DMC), and ethyl methyl carbonate (EMC) in a volume ratio of 3:0.05:6.95; the lithium salt was lithium hexafluorophosphate (LiPF₆), and the concentration of the lithium salt was 1 M; the negative electrode film-forming additive accounted for 3.5 wt% of the total mass of the electrolyte, in which the vinylene carbonate (VC) accounted for 3.0 wt%, and the methylene methanedisulfonate (MMDS) accounted for 0.5 wt%; and the solvent, lithium salt, and negative electrode film-forming additive were mixed to form an electrolyte.

### Comparative Example 2

Comparative Example 2 differs from Example 1 in that the chemical formula of the lithium manganese iron phosphate positive electrode material was LiMn_{0.5}Fe_{0.5}PO₄, and the compaction density was 2.2 g/cm³; and
in that the solvent includes ethylene carbonate (EC), and ethyl methyl carbonate (EMC) in a volume ratio of 3:7; the lithium salt includes lithium bis(fluorosulfonyl)imide (LiFSI) and lithium hexafluorophosphate (LiPF₆) in a molar ratio of 0.1:9.9, and the concentration of the lithium salt was 1 M; the negative electrode film-forming additive accounted for 3.5 wt% of the total mass of the electrolyte, in which the vinylene carbonate (VC) accounted for 3.0 wt%, and the methylene methanedisulfonate (MMDS) accounted for 0.5 wt%; and the solvent, lithium salt, and negative electrode film-forming additive were mixed to form an electrolyte.

### Comparative Example 3

Comparative Example 3 differs from Example 1 in that the chemical formula of the lithium manganese iron phosphate positive electrode material was LiMn_{0.5}Fe_{0.5}PO₄, and the compaction density was 2.2 g/cm³; and
in that the solvent includes ethylene carbonate (EC), dimethyl carbonate (DMC), ethyl acetate (EA), and ethyl methyl carbonate (EMC) in a volume ratio of 2:2:2:4; the lithium salt includes lithium bis(fluorosulfonyl)imide (LiFSI) and lithium hexafluorophosphate (LiPF₆) in a molar ratio of 3:7, and the concentration of the lithium salt was 1 M; the negative electrode film-forming additive accounted for 0.5 wt% of the total mass of the electrolyte, and it was ethylene sulfate (DTD); and the solvent, lithium salt, and negative electrode film-forming additive were mixed to form an electrolyte.

### Comparative Example 4

Comparative Example 4 differs from Example 1 in that the chemical formula of the lithium manganese iron phosphate positive electrode material was LiMn_{0.5}Fe_{0.5}PO₄, and the compaction density was 2.2 g/cm³; and in that
the solvent include ethylene carbonate (EC), dimethyl carbonate (DMC), ethyl acetate (EA), and ethyl methyl carbonate (EMC) in a volume ratio of 2:2:2:4; the lithium salt includes lithium bis(fluorosulfonyl)imide (LiFSI) and lithium hexafluorophosphate (LiPF₆) in a molar ratio of 3:7, and the concentration of the lithium salt was 1 M; the negative electrode film-forming additive accounted for 16 wt% of the total mass of the electrolyte, in which the ethylene sulfate (DTD) accounted for 6 wt%, and the fluoroethylene carbonate (FEC) accounted for 10 wt%; and the solvent, lithium salt, and negative electrode film-forming additive were mixed to form an electrolyte.

The contents of the ester-based solvent, lithium salt and negative electrode film-forming agent in the electrolytes of Examples 1 to 13 and Comparative Examples 1 to 4 are shown in Table 1.

**Table 1**

| Electrolyte | Mass ratio a of a total mass of DMC+ carboxylate in the non-aqueous solvent | Molar ratio b of LiFSI in the total amount of lithium salt | Mass percentage content d of negative electrode film-forming additive in electrolyte, % |
|---|---|---|---|
| Example 1 | 0.4 | 0.3 | 4 |
| Example 2 | 0.3 | 0.5 | 3.5 |
| Example 3 | 0.6 | 0.2 | 5 |
| Example 4 | 0.5 | 0.3 | 3.5 |
| Example 5 | 0.05 | 0.4 | 3.5 |
| Example 6 | 0.3 | 0.05 | 3.5 |
| Example 7 | 0.1 | 0.1 | 3.5 |
| Example 8 | 0.4 | 0.3 | 2 |
| Example 9 | 0.4 | 0.3 | 8 |
| Example 10 | 0.01 | 0.1 | 3.5 |
| Example 11 | 0.4 | 0.3 | 10 |
| Example 12 | 0.4 | 0.3 | 1.5 |
| Example 13 | 0.8 | 1 | 3.5 |
| Comparative Example 1 | 0.05 | 0 | 3.5 |
| Comparative Example 2 | 0 | 0.1 | 3.5 |
| Comparative Example 3 | 0.4 | 0.3 | 0.5 |
| Comparative Example 4 | 0.4 | 0.3 | 16 |

The performances of the batteries obtained in Examples 1 to 13 and Comparative Examples 1 to 4 were tested.

### 1. Rate performance test:

The batteries obtained in each of the Examples and Comparative Examples were charged at a constant current and constant voltage of 0.5 C at a temperature of 25°C, the cutoff voltage was 4.2 V, the cutoff current was 0.05C; then the batteries were discharged to 2.5 V at a constant current of 0.5 C for three cycles. The discharge capacity of the last time was taken as the initial capacity, and it was recorded as Q0. The batteries were then charged at a constant current and constant voltage of 0.5 C, the cutoff voltage was 4.2 V, and the cutoff current was 0.05 C. After fully discharged, the batteries were discharged at a rate of 2 C, and the discharge capacity was recorded as Q1. The discharge capacity retention rate=Q1/Q0 was tested, and the test results were shown in Table 2.

### 2. Cycle performance test:

After the batteries obtained in each of the Examples and Comparative Examples were left to stand for 1 h at a temperature of 25°C, a full charge and full discharge cycle operation was performed on the batteries, and the capacity retention rates at 200 cycles, 500 cycles and 1000 cycles were recorded. The test results were shown in Table 2.

Full charging: the batteries were charged at a constant current of 0.5 C and a constant voltage, the cutoff voltage was 4.2 V, and the cutoff current was 0.05 C.

Full discharging: the batteries were discharged to 2.5 V at a constant current of 0.5 C.

**Table 2**

| Battery | Discharge capacity retention rate | Room-temperature capacity retention rate | | | High-temperature capacity retention rate | | |
|---|---|---|---|---|---|---|---|
| | 2C | 200 cycles | 500 cycles | 1000 cycles | 200 cycles | 500 cycles | 1000 cycles |
| Example 1 | 91.56 | 98.53 | 96.52 | 93.86 | 97.61 | 94.93 | 91.05 |
| Example 2 | 91.67 | 98.56 | 96.64 | 93.98 | 97.49 | 94.84 | 90.85 |
| Example 3 | 91.49 | 98.49 | 96.48 | 93.82 | 97.22 | 94.65 | 90.67 |
| Example 4 | 91.52 | 98.34 | 96.22 | 93.41 | 96.85 | 93.97 | 90.28 |
| Example 5 | 89.31 | 97.79 | 95.78 | 92.73 | 96.48 | 93.12 | 89.58 |
| Example 6 | 91.02 | 98.16 | 95.86 | 92.88 | 96.24 | 93.46 | 89.76 |
| Example 7 | 90.11 | 97.92 | 95.84 | 92.71 | 96.16 | 92.91 | 89.22 |
| Example 8 | 91.58 | 96.42 | 94.13 | 91.54 | 95.78 | 92.71 | 88.65 |
| Example 9 | 89.44 | 95.92 | 93.84 | 90.81 | 94.16 | 91.21 | 87.12 |
| Example 10 | 87.65 | 96.29 | 93.98 | 90.82 | 94.62 | 91.65 | 87.57 |
| Example 11 | 87.78 | 96.51 | 93.45 | 90.26 | 94.68 | 91.39 | 86.97 |
| Example 12 | 91.25 | 95.96 | 93.74 | 90.98 | 95.27 | 92.13 | 87.81 |
| Example 13 | 92.25 | 96.21 | 93.65 | 90.69 | 94.25 | 90.91 | 86.82 |
| Comparative Example 1 | 87.23 | 95.95 | 93.37 | 89.84 | 94.86 | 90.76 | 86.46 |
| Comparative Example 2 | 87.56 | 96.24 | 93.84 | 90.54 | 95.01 | 91.02 | 86.83 |
| Comparative Example 3 | 90.16 | 94.22 | 91.05 | 86.44 | 93.01 | 89.55 | 82.31 |
| Comparative Example 4 | 83.11 | 94.61 | 91.75 | 87.76 | 94.18 | 90.89 | 85.27 |

As can be seen from the test data in Table 2, for the batteries in Example 1 to 13 of the present disclosure, the discharge capacity retention rate ranges from 86.78% to 92.25%; after 200 cycles of charging and discharging, the room-temperature capacity retention rate ranges from 95.92% to 98.56%, and the high-temperature capacity retention rate ranges from 94.25% to 97.61%; after 500 cycles of charging and discharging, the room-temperature capacity retention rate ranges from 93.45% to 96.64%, and the high-temperature capacity retention rate ranges from 90.91% to 94.93%; after 1000 cycles of charging and discharging, the room-temperature capacity retention rate ranges from 90.26% to 93.98%; and the high-temperature capacity retention rate ranges from 86.82% to 91.05%. It can be seen that the improvement effect is remarkable. It shows that the optimized electrolyte can solve the problem that manganese ions in the lithium manganese phosphate positive electrode material are easily dissolved and deposited on the surface of negative electrode to destroy the interface film. In this way, the transport rate of lithium ions can be improved, and the kinetic performance can be improved. Further, the conductivity, the battery rate performance, and the cycle performance can be improved. It can be seen that the overall performance of batteries in Comparative Examples 1 to 4 were slightly worse than that of Examples 1 to 13. In Comparative Example 1, LiFSI was not used as the lithium salt, and only LiPF₆ was used. As a result, the content of DMC+ carboxylate is low, and the result calculated by formula I is less than 0.1. Since the content of DMC+ carboxylate is low, the kinetic performance was poor, the quality of the obtained SEI film was deteriorated, and the battery rate performance and the cycling performance were also poor.

In the non-aqueous solvent of Comparative Example 2, dimethyl carbonate (DMC) and ethyl acetate (EA) were not used, and only other carbonate-based solvents were used. As a result, the content of LiFSI was low, and the result calculated by formula I was less than 0.1. Since the content of LiFSI was low, and the DMC+ carboxylate was not used, the kinetic performance was poor, and the battery rate performance and the cycling performance were also poor.

In Comparative Example 3, the content of the negative electrode film-forming additive was too low, and the result calculated by formula II was less than 3. When the content of the negative electrode film-forming additive was low, a dense SEI film could not be formed or a damaged SEI film could not be repaired in a later cycle, thus resulting in severe deterioration of the battery cycle life.

In Comparative Example 4, the content of the negative electrode film-forming additive was too high, and the result calculated by formula II was greater than 20. When the content of the negative electrode film-forming additive was too high, the impedance was large, and the kinetic performance and the cycle performance were deteriorated, thus resulting in severe deterioration of the battery cycle life.

It should be noted that the terms such as "first" and "second" in the specification and the claims of the present disclosure are used to distinguish similar objects and are not necessarily used to describe a specific order or sequence. It should be understood that the terms used in this way may be interchanged under appropriate circumstances, so that the embodiments of the present disclosure described herein may be implemented in a sequence other than those illustrated or described herein.

## Claims

1. An electrolyte adapted to a lithium manganese iron phosphate positive electrode material, the electrolyte comprising a non-aqueous solvent, a lithium salt, and a negative electrode film-forming additive; the non-aqueous solvent comprising a carbonate and a carboxylate, the carbonate comprising dimethyl carbonate; and the lithium salt comprising lithium bis(fluorosulfonyl)imide;
wherein a mass ratio a of a total mass of the dimethyl carbonate and the carboxylate in the non-aqueous solvent, a molar ratio b of the lithium bis(fluorosulfonyl)imide in the lithium salt, a molar ratio y of a manganese element in the lithium manganese iron phosphate positive electrode material, and a compaction density c of a positive electrode sheet satisfy a formula I as follows: $0.1 \leq \frac{a + b}{y \times c} \leq 3$
in the formula I, 0.01≤a≤1; 0.01≤b≤1; and 1.8≤c≤2.7 in g/cm³;
a chemical formula of the lithium manganese iron phosphate positive electrode material is LiₓMn_{y}Fe_{1-y}PO₄, wherein 0.95≤x≤1.05, and 0.3≤y≤0.8; and
a mass ratio d of the negative electrode film-forming additive in the electrolyte and the y satisfy a formula as follows: $3 \leq 100 \times d / y \leq 20$
in the formula II, 0.001≤d≤0.2.

2. The electrolyte according to claim 1, wherein in the formula I, $0.1 \leq \frac{a + b}{y \times c} \leq 3$.

3. The electrolyte according to claim 1 or 2, wherein, in the formula I, 0.05≤a≤1;
and/or, in the formula I, 0.05≤b≤1;
and/or, in the formula I, 0.1≤a+b≤2.

4. The electrolyte according to claim 3, wherein in the formula I, 0.1≤a≤1;
and/or, in the formula I, 0.1≤b≤1;
and/or, in the formula I, 0.2≤a+b≤2.

5. The electrolyte according to claim 3 or 4, wherein in the formula I, 0.1≤a≤0.8;
and/or, in the formula I, 0.1≤b≤0.8;
and/or, in the formula I, 0.2≤a+b≤1.5.

6. The electrolyte according to any one of claims 1 to 5, wherein in the formula I, 1.9≤c≤2.6;
and/or, 0.4≤y≤0.8.

7. The electrolyte according to any one of claims 1 to 6, wherein in the formula II, 0.01≤d≤0.15;
and/or, in the formula II, 5≤100×d/y≤15.

8. The electrolyte according to claim 7, wherein in the formula II, 0.01≤d≤0.10.

9. The electrolyte according to any one of claims 1 to 8, wherein a mass ratio of the non-aqueous solvent in the electrolyte ranges from 0.5 to 0.9; a mass ratio of the lithium salt in the electrolyte ranges from 0.05 to 0.2; and a mass ratio of the negative electrode film-forming additive in the electrolyte ranges from 0.01 to 0.15, and a sum of above mass ratios is 0.95 to 1.

10. The electrolyte according to claim 9, wherein the electrolyte further comprises auxiliary agents, and a mass ratio of the auxiliary agents in the electrolyte ranges from 0.01 to 0.2.

11. The electrolyte according to any one of claims 1 to 10, wherein the carboxylate in the non-aqueous solvent is selected from at least one of methyl acetate, ethyl acetate, methyl propionate, ethyl propionate, methyl butyrate, propyl acetate, methyl formate, propyl propionate, methyl methacrylate, methyl isobutyrate, methyl trimethylacetate; or ethyl trimethylacetate;
and/or, the carbonate in the non-aqueous solvent comprises at least one of ethylene carbonate, propylene carbonate, ethyl methyl carbonate, or diethyl carbonate in addition to the dimethyl carbonate.

12. The electrolyte according to claim 11, wherein the non-aqueous solvent comprises the ethylene carbonate, the dimethyl carbonate, the ethyl acetate, the methyl acetate, and the ethyl methyl carbonate.

13. The electrolyte according to claim 12, wherein a mass ratio of the ethylene carbonate, the dimethyl carbonate, the ethyl acetate, the methyl acetate, and the ethyl methyl carbonate is (1 to 3):(1 to 3):(1 to 3):(3 to 5).

14. The electrolyte according to any one of claims 1 to 13, wherein the lithium salt comprises at least one of lithium tetrafluoroborate, lithium hexafluorophosphate, lithium perchlorate, lithium bis(trifluoromethylsulfonyl) imide, or lithium difluoro(oxalate)borate in addition to the lithium bis(fluorosulfonyl)imide.

15. The electrolyte according to claim 14, wherein the lithium salt comprises the lithium bis(fluorosulfonyl)imide and the lithium hexafluorophosphate.

16. The electrolyte according to claim 15, wherein a molar ratio of the lithium bis(fluorosulfonyl)imide to the lithium hexafluorophosphate is (3 to 5):(5 to 7).

17. The electrolyte according to any one of claims 1 to 16, wherein the negative electrode film-forming additive is selected from at least one of vinylene carbonate, vinylethylene carbonate, methylene ethylene carbonate, fluoroethylene carbonate, trifluoromethyl ethylene carbonate, di-fluoro ethylene carbonate, ethylene sulfate, propylene sulfate, methyl ethylene sulfate, ethylene sulfite, 1,3-propane sultone, 1,4-butane sultone, prop-1-ene-1,3-sultone, or methylene methanedisulfonate.

18. The electrolyte according to claim 17, wherein the negative electrode film-forming additive is selected from at least one of the vinylene carbonate, the vinyl ethylene carbonate, the fluoroethylene carbonate, the ethylene sulfate, the ethylene sulfite, and methylene methanedisulfonate.

19. The electrolyte according to claim 18, wherein a mass percentage content of the vinylene carbonate in the negative electrode film-forming additive ranges from 30% to 100%.

20. A battery comprising a positive electrode sheet, a negative electrode sheet, a separator, and an electrolyte; wherein a positive electrode material of the positive electrode sheet is lithium manganese iron phosphate; and the electrolyte is the electrolyte adapted to the lithium manganese iron phosphate positive electrode material as claimed in any one of claims 1 to 19.
